# EUROPÄISCHE PATENTSCHRIFT

(11) **EP 0 982 453 B1**
(45) Veröffentlichungstag und Bekanntmachung des Hinweises auf die Patenterteilung: **02.03.2005**
(21) Anmeldenummer: 99114466.8
(22) Anmeldetag: 23.07.1999
(51) Int. Cl.: E05B 49/00, B60R 25/00

(54) **Fahrzeugschliessanlage**
Vehicle lock system
Système de verrouillage pour véhicule

(30) Priorität: 28.08.1998 DE 19839350
(43) Veröffentlichungstag der Anmeldung: 01.03.2000
(73) Patentinhaber: DaimlerChrysler AG, 70567 Stuttgart (DE)
(72) Erfinder: Daiss, Michael, 70794 Filderstadt (DE); Geber, Michael, 72574 Bad Urach (DE)

(56) Entgegenhaltungen:
- EP-A- 0 426 114
- DE-A- 4 123 654
- DE-C- 19 735 658
- JP-A- 2 200 980
- US-A- 5 499 022

## Beschreibung

Die Erfindung bezieht sich auf eine Fahrzeugschließanlage nach dem Oberbegriff des Anspruchs 1.

Fahrzeugschließanlagen mit einer über ein Authentikationselement zwischen einem entriegelten und einem verriegelten Zustand umsteuerbaren Schließeinheit sind beispielsweise bei Automobilen allgemein gebräuchlich, wobei das bewegliche Fahrzeugteil, welches geöffnet und geschlossen werden kann und dadurch den Zugang zu einem angrenzenden Fahrzeuginnenraumbereich freigibt bzw. absperrt, insbesondere ein Heckdeckel sein kann, über den der Zugang von außen zu einem Kofferraum des Fahrzeugs erfolgt. Der Heckdeckel ist bekanntermaßen mit einer zur Fahrzeugschließanlage gehörenden Schließeinheit versehen, die unter Verwendung eines benutzerseitig mitführbaren, tragbaren Autentikationselementes zwischen einem entriegelten und einem verriegelten Zustand umsteuerbar ist. Damit soll der Zugang zum Fahrzeug und insbesondere auch zum Kofferraum nur den berechtigten Fahrzeugnutzern gestattet werden, die hierzu über ein jeweiliges Authentikationselement verfügen, das sie als berechtigt ausweist.

Je nach Auslegung der Fahrzeugsschließanlage sind als Authentikationselemente herkömmlicherweise mechanische oder elektronische Schlüssel, siehe z.B. die Patentschrift DE 195 31 219 C1, in jüngerer Zeit vermehrt auch Chipkarten, Transponder und dergleichen als Teil eines sogenannten "Keyless-Go"-Systems in Gebrauch, siehe z.B. die Patentschrift DE 44 09 167 C1. Die Keyless-Go-Systeme und die Systeme mit elektronischen Schlüsseln haben den Vorteil, daß der Fahrzeugnutzer keine mechanischen Handhabungsaktionen durchzuführen braucht, um sich als zugangs- und/oder fahrberechtigt auszuweisen, d.h. die Schließanlage und/oder eine elektronische Wegfahrsperre wirksam ansteuern zu können.

Die Keyless-Go-Systeme haben gegenüber den Systemen mit elektronischen Schlüsseln den weiteren Vorteil, daß es bei ihnen zum Nachweis der Zugangs- und/oder Fahrberechtigung genügt, wenn der Fahrzeugnutzer ein für das Fahrzeug gültiges Authentikationselement bei sich trägt, ohne daß er irgendwelche Handhabungsaktionen am Authentikationselement vornehmen muß. Üblicherweise sind in solche Schließanlagen neben der hier interessierenden Schließeinheit, z.B. für den Heckdeckel, weitere Schließeinheiten einbezogen, wie für Fahrzeugtüren etc. Andererseits kann das vorliegend betrachtete, den Zugang zu einem angrenzenden Fahrzeuginnenraumbereich wahlweise freigebende oder absperrende Fahrzeugteil selbst eine Fahrzeugtür sein. Auch andere Fahrzeugteile mit einer solchen Funktion kommen hier in Betracht, wie Motorhaube, Schiebedach, abnehmbares Dach etc.

In all den genannten Fällen kann sich das Problem ergeben, daß der Fahrzeugnutzer sein Authentikationselement in dem absperrbaren Fahrzeuginnenbereich liegenläßt und dann das zugehörige Fahrzeugteil schließt. So kann das Authentikationselement z.B. im abgesperrten Kofferraum zurückbleiben, wenn der Fahrzeugnutzer den Heckdeckel von außen zuklappt. Dieses Problem ist besonders dann gravierend, wenn das Fahrzeugteil in der geöffneten Stellung in seinen Verriegelungszustand geschaltet werden kann und dieser auch beim Schließen des Fahrzeugteils aufrecht erhalten bleibt, wie dies beim Heckdeckel typischerweise der Fall ist, wobei dann meist auch die übrigen Zugangsmöglichkeiten zum Fahrzeug, wie die Türen, verriegelt sind. Zudem ist in vielen Fällen der Kofferraum vom übrigen Fahrzeuginnenraumbereich aus nicht zugänglich. Der berechtigte Fahrzeugnutzer muß sich dann erst ein weiteres gültiges Authentikationselement beschaffen, um sich wieder Zugang zum liegengelassenen Authentikationselement zu verschaffen, wenn er die Schließeinheit nicht aufbrechen will.

Es ist für Keyless-Go-Systeme bekannt, fahrzeugseitig an ausgewählten Stellen Antennen vorzusehen, deren Reichweite, auch Fangbereich genannt, den Wirkbereich eines zugehörigen drahtlosen Authentikations-Kommunikationskanals definiert, über den zugangs- und/oder fahrberechtigungsprüfende Kommunikationsvorgänge für eine Fahrzeugschließanlage bzw. eine elektronische Wegfahrsperre erfolgen. Ein solcher Kommunikationsvorgang läuft genau dann erfolgreich ab, wenn sich ein für das Fahrzeug gültiges Authentikationselement im so definierten Wirkbereich des Kommunikationskanals befindet. Eine spezielle derartige Antennenvorrichtung ist in der Patentschrift DE 195 42 441 C2 beschrieben. Es ist daraus unter anderem bekannt, daß zumindest ein Paar von Einzelantennen unter einer Hutablage, im Kofferraum oder in dessen Nähe angeordnet werden kann, um Signale zu einem Authentikationselement im Kofferraum oder in unmittelbarer Nähe dazu auszusenden, d.h. der Fangbereich liegt dann in oder um den Kofferraum.

Die DE 197 35 658 C1 offenbart ein Verfahren zur Vermeidung des Missbrauchs von einem in ein Fahrzeug eingeschlossenen Transponders. Der Transponder ist Teil eines schlüssellos arbeitenden Fahrzeugzugangs- und Fahrberechtigungssystems und wirkt mit einer im Fahrzeug befindlichen Steuerung für Zugangs- und Fahrberechtigung zusammen.

Aus der EP 0 426 114 A2 ist ein schlüsselloses Fahrzeugschlosssystem zum Steuern eines oder mehrerer Türschlösser und/oder eines Fahrzeugschaltschlosses, wie z.B. eines Lenkschlosses, ohne die Verwendung eines Schlüssels, bekannt.

Die US 549902 A offenbart ein System zur Fernbetätigung der Verriegelung und Entriegelung der Türen und sonstigen Öffnungen eines Kraftfahrzeugs. In diesem System ist eine Funktion integriert, welche erkennt, dass eine tragbare Vorrichtung im Inneren des Fahrgastraums vergessen worden ist.

Aus der JP 2200980 A ist eine Vorrichtung bekannt, die bei einem Vergessen des Schlüssels im Innenraum eines Kraftfahrzeugs nicht die abschließbare Tür, sondern das Fahrerfenster automatisch öffnet.

Eine Schließanlage ist in der Offenlegungsschrift DE 41 23 654 A1 beschrieben. Bei dieser Schließanlage wird durch die Auslösung eines Verriegelungsbefehls ein Frage-Antwort-Dialog zwischen einer fahrzeugseitigen Antenneneinheit und einem tragbaren Transponder, der als Authentikationselement dient, ausgelöst und festgestellt, ob sich der Transponder im Empfangsbereich der einen oder mehreren Antennen innerhalb des betreffenden Fahrzeuginnenraumbereichs befindet oder aber außerhalb des Fahrzeugs. Die angeforderte Verriegelung wird erst dann durchgeführt, wenn erkannt wird, dass sich der Transponder außerhalb und nicht innerhalb des Fahrzeugs befindet. Als bekannt ist in dieser Druckschrift des weiteren eine Schließanlage angegeben, bei welcher ein entsprechender Frage-Antwort-Dialog zur Transpondererkennung nicht direkt mit Auslösung eines Verriegelungsbefehls, sondern erst um eine vorgegebene Wartezeit später ausgelöst und im Erkennungsfall ein Warnsignal erzeugt wird.

Der Erfindung liegt als technisches Problem die Bereitstellung einer Fahrzeugschließanlage der eingangs genannten Art zugrunde, die Schutz gegen ein versehentliches Einschließen eines Authentikationselementes in einem absperrbaren Fahrzeuginnenraumbereich bietet, wobei der Zugang und das Auffinden des versehentlich eingeschlossenen Authentikationselements für den Fahrzeugnutzer erleichtert wird.

Die Erfindung löst dieses Problem durch die Bereitstellung einer Fahrzeugschließanlage mit den Merkmalen des Anspruchs 1. Bei dieser Schließanlage sind Authentikationselement-Erkennungsmittel vorgesehen, die zum einen feststellen, ob sich ein Authentikationselement, insbesondere ein solches, welches für das betreffende Fahrzeug Zugangs- und/oder Fahrberechtigung gibt, in dem vom beweglichen Fahrzeugteil absperrbaren Fahrzeuginnenraumbereich befindet, und zum andern für diesen Fall spezielle, vorteilhafte Aktionen einleiten.

So bewirken bei der Schließanlage nach Anspruch 1 die Authentikationselement-Erkennungsmittel im Erkennungsfall nicht nur ein Entriegeln der Schließeinheit des betreffenden Fahrzeugteils, sondern darüber hinaus ein selbsttätiges Öffnen dieses Fahrzeugteils. Dies stellt ein für den Fahrzeugnutzer unmittelbar erkennbares Meldesignal darüber dar, dass sich noch ein Authentikationselement im betreffenden Fahrzeuginnenraumbereich befindet. Der Fahrzeugnutzer kann dann sein gegebenenfalls im Fahrzeuginnenraumbereich liegengelassenes Authentikationselement direkt wieder an sich nehmen.

Die Schließanlage nach Anspruch 2 beinhaltet die spezielle Maßnahme, dass die Authentikationselement-Erkennungsmittel die Überwachung des Fahrzeuginnenraumbereichs auf das Vorhandensein eines Authentikationselementes unabhängig vom Vorliegen einer Schließanforderung auch im entriegelten Zustand der Schließanlage vornehmen und im Erkennungsfall ein entsprechendes Meldesignal erzeugen. Durch das Meldesignal, bei dem es sich z.B. um ein akustisches oder optisches Signal handeln kann, kann der Fahrzeugnutzer rechtzeitig vor dem Schließen des Fahrzeugbauteils davor gewarnt werden, sein Authentikationselement einzuschließen.

In jedem Fall wird durch diese erfindungsgemäßen Maßnahmen vermieden, daß der Fahrzeugnutzer bei liegengelassenem Authentikationselement nach Schließen des betreffenden Fahrzeugteils bei ansonstem verriegelten Schließanlagenzustand das Fahrzeug im unzutreffenden Glauben verläßt, das Fahrzeug sei vollständig verriegelt. Die Authentikationselement-Erkennungsmittel können in irgendeiner herkömmlichen Weise realisiert sein, insbesondere unter Verwendung eines drahtlosen Erkennungs-Kommunikationskanals, über den ein fahrzeugseitiger, z.B. mit geeignet gestalteten und angeordneten Antennen ausgerüsteter Kommunikationsteil mit einem korrespondierenden Kommunikationsteil des Authentikationselementes kommunizieren kann, wenn sich letzteres im Wirkbereich, d.h. Fangbereich dieses Kommunikationskanals befindet.

Die Schließanlage nach Anspruch 3 hat den besonderen Vorteil, daß die Authentikationselement-Erkennungsmittel in ihrer Überwachungsfunktion, ob sich ein Authentikationselement im betreffenden Fahrzeuginnenraumbereich befindet, vom Benutzer temporär deaktiviert werden können. Dies macht es möglich, dort absichtlich ein Authentikationselement abzulegen und einzuschließen, wenn dies gewünscht ist, ohne daß dies zu irgendwelchen Aktionen, wie Erzeugung eines Meldesignals oder Entriegelung einer Schließeinheit führt. Damit kann der Fahrer ein erstes Authentikationselement in diesem Fahrzeuginnenraumbereich, z.B dem Kofferraum, ablegen und die Fahrzeugschließanlage weiter mittels eines zweiten Authentikationselementes in normaler Weise ansteuern.

Bei einer nach Anspruch 4 weitergebildeten Fahrzeugschließanlage beinhalten die Authentikationselement-Erkennungsmittel einen solchen drahtlosen Erkennungskommunikationskanal, der dabei vorteilhafterweise so ausgelegt ist, daß dessen Wirkbereich gerade den vom beweglichen Fahrzeugteil absperrbaren Fahrzeuginnenraum abdeckt, so daß entsprechende Erkennungskommunikationsvorgänge zwischen einem fahrzeugseitigen Kommunikationsteil und dem Authentikationselement dann und nur dann erfolgreich ablaufen, wenn sich das Authentikationselement im absperrbaren Fahrzeuginnenraumbereich befindet, was wiederum die eindeutige Erkennung des Vorhandenseins eines solchen Authentikationselementes in diesem Bereich ermöglicht.

In weiterer Ausgestaltung dieser Maßnahme macht gemäß Anspruch 5 der drahtlose Erkennungskommunikationskanal auf Seiten des Authentikationselementes von denselben Kommunikationskomponenten Gebrauch, die dieses ohnehin für eine die Zugangsberechtigung prüfende Authentikationskommunikation enthält, wie sie zur Ansteuerung der Schließeinheit vorgesehen ist. Diese Ausgestaltung der Erfindung ist folglich nutzbringend für Keyless-Go-Systeme und Systeme mit elektronischen Schlüsseln einsetzbar, da in diesem Fall der bereits vorhandene drahtlose Authentikations-Kommunikationskanal für die Erkennung des Vorhandenseins eines Authentikationselementes im Kofferraum oder einem anderen absperrbaren Fahrzeuginnenraumbereich mitgenutzt werden kann.

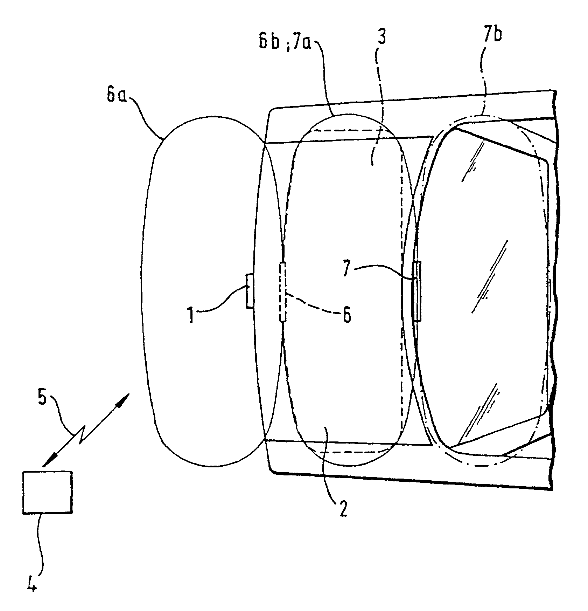

Eine vorteilhafte Ausführungsform der Erfindung ist in der Zeichnung dargestellt und wird nachfolgend beschrieben.

Die einzige Figur zeigt eine schematische Draufsicht auf den Kofferraumbereich eines Automobils mit einem schematisch wiedergegebenen Wirkbereich eines Authentikationselement-Erkennungskommunikationskanals.

Das in der Figur nur mit dem hier interessierenden, heckseitigen Bereich wiedergegebene Automobil ist mit einer Fahrzeugschließanlage ausgerüstet, die durch ein herkömmliches Keyless-Go-System realisiert ist, alternativ jedoch von irgendeinem anderen herkömmlichen Typ sein kann. In die Schließanlage ist in üblicher Weise neben hier nicht weiter interessierenden Schließeinheiten, wie für die Fahrzeugtüren etc., eine Schließeinheit 1 für einen Heckdeckel 2 einbezogen. Im entriegelten Zustand der Schließeinheit 1 kann der Heckdeckel 2 vom Fahrzeugnutzer von außen geöffnet und geschlossen werden, wobei er in der geöffneten Stellung den Zugang zu einem gestrichelt angedeuteten Kofferraum 3 freigibt.

Zur Fahrzeugschließanlage gehören nutzerseitig eines oder mehrere, für das betreffende Fahrzeug gültige Authentikationselemente 4, von denen in der Figur eines stellvertretend gezeigt ist. Die Authentikationselemente 4 dienen dem Fahrzeugnutzer zum Nachweis seiner Zugangsberechtigung und gegebenenfalls auch seiner Fahrberechtigung, d.h. er kann mit ihnen die Fahrzeugschließanlage und, soweit vorhanden, eine elektronische Wegfahrsperre ansteuern. Im Fall der Realisierung als Keyless-Go-System genügt es dabei, daß der Fahrzeugnutzer das Authentikationselement 4 bei sich trägt. Es kommuniziert dann wirksam mit der Fahrzeugschließanlage bzw. der elektronischen Wegfahrsperre über einen entsprechenden Authentikationskommunikationskanal 5 immer dann, wenn es sich im Wirkbereich dieses Kommunikationskanales befindet. Dieser Wirkbereich kann, wie eingangs erwähnt, z.B. durch eine geeignete Antennenvorrichtung in gewünschter Weise festgelegt werden. Zweckmäßigerweise umfaßt dieser Wirkbereich im Fall der Zugangsberechtigungsprüfung eine fahrzeugaußenseitige Zugangszone, in die ein Fahrzeugnutzer ohnehin beim Herannahen an das Fahrzeug eintritt, und im Fall der Fahrberechtigungsprüfung einen Innenraumbereich, in dem sich der Fahrzeugnutzer während des Fahrbetriebs typischerweise aufhält oder das Authentikationselement ablegt.

So ist im gezeigten Beispiel eine Antenneneinheit 6 im hinteren Bereich des Heckdeckels 2, alternativ an einem nicht gezeigten Stoßfänger, derart angeordnet, daß sie mit einer typischen Doppelkeulen-Charakteristik abstrahlt, von der die eine Keule 6a eine heckseitige, fahrzeugaußenseitige Zugangszone abdeckt, während die andere Abstrahlkeule 6b im wesentlichen den Kofferraumbereich 3 abdeckt. Wenn das Authentikationselement 4 in die Reichweite der außenseitigen Abstrahlkeule 6a eintritt, wird selbstätig oder auf Benutzeranforderung, beispielsweise über ein am Heckdeckel angeordnetes Entriegelungs-Betätigungselement, ein Zugangsberechtigungsprüfvorgang ausgelöst, der bei erfolgreicher Durchführung dazu führt, daß die Heckdeckel-Schließeinheit 1 in ihren entriegelten Zustand gesteuert wird. Der somit als zugangsberechtigt ausgewiesene Fahrzeugnutzer kann dann über ein am Heckdeckel angeordnetes Öffnungs-Bedienelement den Heckdeckel öffnen und sich Zugang zum Kofferraum 3 verschaffen. Je nach Systemauslegung werden mit der Heckdeckel-Schließeinheit 1 auch die türseitigen Schließeinheiten mit entriegelt, oder sie bleiben verriegelt.

Durch Betätigen eines Verriegelungs-Bedienelementes kann der Fahrzeugnutzer anschließend die Heckdeckel-Schließeinheit und die übrigen Schließeinheiten in ihren verriegelten Zustand bringen, solange sich sein Authentikationselement 4 weiterhin im Wirkbereich des die Zugangsberechtigung prüfenden Kommunikationskanals befindet. Wenn er dann den Heckdeckel 2 zuklappt, würde dieser bei herkömmlichen Systemen in seinem verriegelten Zustand verbleiben, so daß damit ein versehentlich im Kofferraum 3 liegengebliebenes Authentikationselement dort eingeschlossen würde.

Um dies zu verhindern oder jedenfalls den Fahrzeugnutzer rechtzeitig davor zu warnen, sind bei der erfindungsgemäßen Fahrzeugschließanlage Authentikationselement-Erkennungsmittel vorgesehen, mit denen festgestellt werden kann, ob sich ein Authentikationselement in dem abschließbaren Fahrzeuginnenraumbereich, im gezeigten Beispiel dem Kofferraum 3, befindet oder nicht. Dazu ist bei der gezeigten Schließanlage neben der heckseitigen Antenne 6 eine weitere Antenne 7 im Hutablagenbereich angeordnet, die ebenfalls mit einer typischen Doppelkeulencharakteristik abstrahl, wie gestrichelt gezeichnet. Die eine Abstrahlkeule 7a deckt den Kofferraumbereich 3 ab, während die andere Abstrahlkeule 7b einen Fahrzeugfondbereich abdeckt, was hier nicht weiter interessiert. Des weiteren umfassen die Authentikations-Erkennungsmittel ein nicht gezeigtes, fahrzeugseitiges Zugangssteuerteil, das die Steuereinheit der Fahrzeugschließanlage bildet. Dieses Zugangssteuerteil erfüllt zum einen die üblichen Funktionen einer solchen Schließanlagen-Steuereinheit, indem es insbesondere die benutzerseitigen Anforderungsbefehle zur Auslösung gewünschter Zugangsteuerungsmaßnahmen empfängt, den erforderlichen Authentikationsvorgang auslöst und auf erfolgreichen Ablauf überprüft und in Abhängigkeit davon die gewünschte Schließanlagensteuerungsmaßnahme veranlaßt oder nicht. Zum anderen erfüllt es als Teil der Authentikationselement-Lokalisierungsmittel die Funktion, aus den Kommunikationssignalen der beiden genannten Antennen 6, 7 zu ermitteln, ob sich im Kofferraum 3 ein für das Fahrzeug gültiges Authentikationselement befindet oder nicht. Dazu löst es jeweils einen Authentikationskommunikationsvorgang über jede der beiden Antennen 6 oder 7 aus und fragt anschließend ab, ob der Kommunikationsvorgang über jede der beiden Antennen 6, 7 erfolgreich abläuft. Dies ist genau dann der Fall, wenn sich ein gültiges Authentikationselement im Kofferraum 3 befindet, da dieser Bereich 3 gerade dem gemeinsamen Fangbereich beider Antennen 6, 7 entspricht.

Eine alternative Auslegung der Authentikationselement-Erkennungsmittel besteht darin, eine Antennenanordnung speziell so vorzusehen, daß ihr Fang- und damit Wirkbereich nur im Kofferraum 3 liegt und diesen dabei vollständig abdeckt. Der Antennensignal-Auswerteteil dieser Authentikationselement-Erkennungsmittel, der wiederum in der Schließanlagen-Steuereinheit lokalisiert sein kann, braucht in diesem Fall lediglich festzustellen, ob ein über diese Antennenanordnung ausgelöster Authentikationsvorgang erfolgreich abläuft, was dann ein eindeutiges Indiz dafür ist, daß sich ein gültiges Authentikationselement im Kofferraum 3 befindet. Es versteht sich, daß die Authentikationselement-Erkennungsmittel auch anderweitig realisiert sein können. So kann beispielsweise ein von einem oder mehreren Authentikationskommunikationskanälen unabhängiger, eigenständiger Erkennungskommunikationskanal vorgesehen sein, über den ein im Authentikationselement, wie einem mechanischen oder elektronischen Schlüssel, eingebauter Sender oder Sendeempfänger laufend oder auf ein empfangenes Anforderungssignal hin ein Ortungssignal abgibt, das von einem am Kofferraum angeordneten Empfänger empfangen werden kann, dessen Empfangsreichweite im wesentlichen dem Kofferraumbereich 3 entspricht.

Unabhängig von der jeweiligen Realisierung des Erkennungsteils der Authentikationselement-Erkennungsmittel sind diese nun darüber hinaus so ausgelegt, daß sie bei erkannntem Authentikationselement im Kofferraum ein entsprechendes Meldesignal als Warnung an den Fahrzeugnutzer abgeben und/oder die Heckdeckel-Schließeinheit 1 in ihren entriegelten Zustand steuern. Damit kann verhindert werden, daß der Fahrzeugnutzer, wenn sich die Schließanlage insgesamt im verriegelten Zustand befindet und der Heckdeckel 2 noch geöffnet ist, sich selbst ausschließt, wenn er das Authentikationselement versehentlich im Kofferraum 3 ablegt und den Heckdeckel 2 zuschlägt. Denn bei der Realisierung, bei welcher die Authentikations-Erkennungsmittel daraufhin die Heckdeckel-Schließeinheit wieder entriegeln, kann der Fahrzeugnutzer sein Authentikationselement wieder aus dem Kofferraum 3 entnehmen. Vorzugsweise sind dabei die Authentikationselement-Erkennungsmittel dergestalt weitergebildet, daß sie nicht nur die Heckdeckel-Schließeinheit in ihren entriegelten Zustand versetzen, sondern darüber hinaus ein selbstätiges Öffnen des Heckdeckels 2 auslösen. Dies stellt dann ein unmittelbares Meldesignal für den Fahrzeugnutzer dar, daß er sein Authentikationselement im Kofferraum 3 liegengelassen haben muß, und er kann dieses dann sofort entnehmen, ohne selbst den Heckdeckel 2 wieder öffnen zu müssen. Dieses Meldesignal verhindert zudem, daß der Fahrzeugnutzer bei im Kofferraum 3 verbliebenem Authentikationselement nach dem Zuschlagen des Heckdeckels 2 fälschlicherweise glaubt, das Fahrzeug sei vollständig verriegelt.

Zusätzlich zu diesem unmittelbaren Meldesignal kann ein Meldesignal in Form eines optischen und/oder akustischen Warnsignals vorgesehen sein, das dann von den Authentikationselement-Erkennungsmitteln zweckmäßigerweise immer schon dann ausgelöst wird, wenn diese das Vorhandensein eines Authentikationselementes im Kofferraum 3 erkennen, so daß der Fahrzeugnutzer den Heckdeckel 2 erst gar nicht zuschlägt. Des weiteren ist ein solches optisches oder akustisches Meldesignal auch dann nützlich, wenn sich die Fahrzeugschließanlage im entriegelten Zustand befindet, um den Fahrzeugnutzer über diese Tatsache zu informieren. Die Anzeige kann z.B. für den Fahrzeugführer sichtbar an einer Instrumententafel des Fahrzeugs erfolgen.

In einer bevorzugten Realisierung sind die Authentikationselement-Erkennungsmittel benutzerangefordert temporär deaktivierbar, z.B. über einen entsprechenden Schalter oder dgl. Damit kann dann bei Bedarf ein Authentikationselement absichtlich im Kofferraum 3 abgelegt und eingeschlossen werden, wenn dies gewünscht ist, ohne daß die entsprechenden Aktionen, d.h. Erzeugung eines entsprechenden Meldesignals und/oder Entriegelung der Heckdeckel-Schließeinheit ausgelöst werden.

## Patentansprüche

1. Fahrzeugschließanlage mit
- einer Schließeinheit (1) für ein zwischen einer geöffneten und einer geschlossenen Stellung bewegliches Fahrzeugteil (2), insbesondere einen Heckdeckel, das den Zugang zu einem angrenzenden Fahrzeuginnenraumbereich (3) in der geöffneten Stellung freigibt und in der geschlossenen Stellung absperrt, wobei
- die Schließeinheit (1) unter Verwendung eines benutzerseitig mitführbaren Authentikationselementes (4) zwischen einem entriegelten Zustand, in der sie das Öffnen des beweglichen Fahrzeugteils freigibt, und einem verriegelten Zustand umsteuerbar ist, in der sie das Öffnen des beweglichen Fahrzeugteils blockiert,
- Authentikationselement-Erkennungsmitteln (6, 7), die feststellen, ob sich ein Authentikationselement (4) in dem an das bewegliche Fahrzeugteil (2) angrenzenden Fahrzeuginnenraumbereicht (3) befindet, und
- die Authentikationselement-Erkennungsmittel (6, 7) die Schließeinheit (2) für das bewegliche Fahrzeugteil (2) in ihren entriegelten Zustand steuern, wenn sie ein Authentikationselement (4) im an das bewegliche Fahrzeugteil angrenzenden Fahrzeuginnenraumbereich (3) feststellen,
**dadurch gekennzeichnet, dass**
die Authentikationselement-Erkennungsmittel (6, 7) ein selbsttätiges Öffnen des beweglichen Fahrzeugteils auslösen, wenn sie ein Authentikationselement (4) im an das bewegliche Fahrzeugteil angrenzenden Fahrzeuginnenraumbereich (3) feststellen.

2. Fahrzeugschließanlage nach Anspruch 1, **dadurch gekennzeichnet, dass**
die Authentikationselement-Erkennungsmittel, auch schon im entriegelten Zustand der Fahrzeugschließanlage die Feststellung vornehmen, ob sich ein Authentikationselement (4) in dem an das bewegliche Fahrzeugteil (2) angrenzenden Fahrzeuginnenraumbereich (3) befindet, und bejahendenfalls ein entsprechendes Meldesignal erzeugen und/oder die Schließeinheit in ihren entriegelten Zustand steuern.

3. Fahrzeugschließanlage nach einem der Ansprüche 1 bis 2, **dadurch gekennzeichnet, dass**
die Authentikationselelent-Erkennungsmittel (6, 7) in ihrer Abfragefunktion, ob sich ein Authentikationselement (4) in dem an das bewegliche Fahrzeugteil (2) angrenzenden Fahrzeuginnenraumbereich (3) befindet, benutzerangefordert temporär deaktivierbar sind.

4. Fahrzeugschließanlage nach einem der Ansprüche 1 bis 3, **dadurch gekennzeichnet, dass**
die Authentikationselement-Erkennungsmittel einen drahtlosen Erkennungskommunikationskanal (5) umfassen, dessen Wirkbereich im wesentlichen dem an das bewegliche Fahrzeugteil (2) angrenzenden Fahrzeuginnenraumbereich (3) entspricht, so dass darüber erfolgende Erkennungskommunikationsvorgänge zwischen den Authentikationselement-Erkennungsmitteln und einem Authentikationselement genau dann erfolgreich ablaufen, wenn sich das Authentikationselement in diesem Fahrzeuginnenraumbereich befindet.

5. Fahrzeugschließanlage nach Anspruch 4, **dadurch gekennzeichnet, dass** der drahtlose Erkennungskommunikationskanal (5) auf Seiten des Authentikationselementes (4) dieselben Kommunikationskomponenten nutzt wie ein Zugangsberechtigungs-Kommunikationskanal, der für Authentikationsvorgänge zur benutzerangeforderten Ansteuerung der Schließeinheit (1) vorgesehen ist.

## Claims

1. A vehicle locking system having
- a locking unit (1) for a vehicle part (2), in particular a rear lid (2), which can be moved between an open and a closed position and which permits access to an adjacent area (3) of the vehicle interior in the open position and blocks it in the closed position,
- it being possible to switch the locking unit (1) between an unlocked status in which it permits the opening of the movable vehicle part and a locked status in which it blocks the opening of the movable vehicle part using an authentication element which can be carried by the user,
- authentication element identification means (6, 7) which determine whether an authentication element (4) is located in the area (3) of the vehicle interior adjacent to the movable vehicle part (2), and
- the authentication element identification means (6, 7) switching the locking unit (1) for the movable vehicle part (2) to its unlocked status when they determine an authentication element (4) in the area (3) of the vehicle interior adjacent to the movable vehicle part,
**characterised in that**
the authentication element identification means (6, 7) trigger an automatic opening of the movable vehicle part when they determine an authentication element (4) in the area (3) of the vehicle interior adjacent to the movable vehicle part.

2. A vehicle locking system in accordance with claim 1,
**characterised in that**
even when the vehicle locking system is in the unlocked status, the authentication element identification means determine whether an authentication element (4) is located in the area (3) of the vehicle interior adjacent to the movable vehicle part (2) and if one is they generate a corresponding warning signal and/or switch the locking unit to its unlocked status.

3. A vehicle locking system in accordance with one of claims 1 to 2,
**characterised in that**
the function of the authentication element identification means (6, 7) which inquires whether an authentication element (4) is located in the area (3) of the vehicle interior adjacent to the movable vehicle part (2) may be temporarily deactivated at the request of the user.

4. A vehicle locking system in accordance with one of claims I to 3,
**characterised in that**
the authentication element identification means comprise a wireless identification communication channel (5) with an effective range which corresponds essentially to the area (3) of the vehicle interior adjacent to the movable vehicle part (2) so that any identification communication processes which take place between the authentication element identification means and an authentication element on said channel run successfully if the authentication element is located in this area of the vehicle interior.

5. A vehicle locking system in accordance with claim 4,
**characterised in that**
the wireless identification communication channel (5) in the authentication element (4) uses the same communication components as an access authorisation communication channel which is provided for authentication processes to operate the locking unit (1) at the request of the user.

## Revendications

1. Système de fermeture pour véhicule comprenant,
- une unité de fermeture (1) pour une partie de véhicule (2) mobile entre une position ouverte et une position fermée, notamment un capot de coffre arrière, qui libère l'accès à une zone voisine d'espace intérieur (3) du véhicule dans la position ouverte, et empêche l'accès dans la position fermée,
- l'unité de fermeture (1) pouvant être commutée, par l'utilisation d'un élément d'authentification (4) pouvant être emporté par l'utilisateur, entre un état déverrouillé dans lequel elle libère l'ouverture de la partie de véhicule mobile, et un état verrouillé dans lequel elle bloque l'ouverture de la partie de véhicule mobile,
- des moyens de reconnaissance d'élément d'authentification (6, 7), qui détectent si un élément d'authentification (4) se trouve dans la zone d'espace intérieur (3) du véhicule, voisine de la partie de véhicule (2) mobile, et
- les moyens de reconnaissance d'élément d'authentification (6, 7) pilotant l'unité de fermeture (2) pour la partie de véhicule (2) mobile, pour qu'elle prenne son état déverrouillé, lorsqu'ils détectent un élément d'authentification (4) dans la zone d'espace intérieur (3) du véhicule, voisine de la partie de véhicule (2) mobile,
**caractérisé en ce que** les moyens de reconnaissance d'élément d'authentification (6, 7) déclenchent une ouverture automatique de la partie de véhicule mobile, lorsqu'ils détectent un élément d'authentification (4) dans la zone d'espace intérieur (3) du véhicule, voisine de la partie de véhicule mobile.

2. Système de fermeture pour véhicule selon la revendication 1, **caractérisé en ce que** les moyens de reconnaissance d'élément d'authentification assurent également déjà dans l'état déverrouillé du système de fermeture de véhicule, la détection de la présence d'un élément d'authentification (4) dans la zone d'espace intérieur (3) du véhicule, voisine de la partie de véhicule (2) mobile, et, dans le cas d'une telle présence, engendrent un signal d'alerte correspondant et/ou pilotent l'unité de fermeture dans son état déverrouillé.

3. Système de fermeture pour véhicule selon l'une des revendications 1 à 2, **caractérisé en ce que** les moyens de reconnaissance d'élément d'authentification (6, 7) sont, à la demande de l'utilisateur, temporairement désactivés quant à leur fonction consistant à détecter la présence d'un élément d'authentification (4) dans la zone d'espace intérieur (3) du véhicule, voisine de la partie de véhicule (2) mobile.

4. Système de fermeture pour véhicule selon l'une des revendications 1 à 3, **caractérisé en ce que** les moyens de reconnaissance d'élément d'authentification comprennent un canal de communications de reconnaissance sans fil (5) dont la zone d'action correspond sensiblement à la zone d'espace intérieur (3) du véhicule, voisine de la partie de véhicule (2) mobile, de sorte que des opérations de communications de reconnaissance s'effectuant par cet intermédiaire, entre les moyens de reconnaissance d'élément d'authentification et un élément d'authentification, se déroulent précisément avec succès lorsqu'un élément d'authentification se trouve dans cette zone d'espace intérieur du véhicule.

5. Système de fermeture pour véhicule selon la revendication 4, **caractérisé en ce que** le canal de communications de reconnaissance sans fil (5) utilise, côté élément d'authentification (4), les mêmes composants de communications qu'un canal de communications d'autorisation d'accès, qui est prévu pour des opérations d'authentification destinées à la commande de l'unité de fermeture (1) à la demande de l'utilisateur.
